# EUROPÄISCHE PATENTSCHRIFT

(11) **EP 1 967 056 B1**
(45) Veröffentlichungstag und Bekanntmachung des Hinweises auf die Patenterteilung: **11.02.2015**
(21) Anmeldenummer: 07106825.8
(22) Anmeldetag: 24.04.2007
(51) Int. Cl.: A01B 45/02

(54) **Bodenbearbeitungsvorrichtung**
Soil cultivation device
Dispositif de traitement de sol

(30) Priorität: 06.03.2007 EP 07103568
(43) Veröffentlichungstag der Anmeldung: 10.09.2008
(73) Patentinhaber: Redexim Handel- en Exploitatie Maatschappij B.V., 3702 AC Zeist (NL)
(72) Erfinder: de Bree, Cornelius Hermanus Maria, 3971 ND Driebergen (NL)
(74) Vertreter: Von Kreisler Selting Werner - Partnerschaft von Patentanwälten und Rechtsanwälten mbB

(56) Entgegenhaltungen:
- EP-A1- 0 037 595
- EP-A1- 0 791 284
- DE-A1- 4 323 315
- GB-A- 2 333 219
- JP-A- 55 089 538

## Beschreibung

Die Erfindung betrifft eine fahrbare Bodenbearbeitungsvorrichtung zum Einbringen von Hohlräumen in den Boden nach dem Oberbegriff des Anspruchs 1.

Derartige Vorrichtungen dienen dazu, mit Hilfe von Stechwerkzeugen Hohlräume in einen Boden einzubringen, wobei in die tieferen Bereiche des Bodens schlitzförmige Hohlräume eingebracht werden und an der Bodenfläche möglichst kleine Löcher verbleiben. Die Hohlräume ermöglichen einen besseren Abfluss von Wasser und Verbessern die Bodenbelüftung und durch die Auflockerung des Bodens wird das Pflanzenwachstum, insbesondere von Gräsern, verbessert.

Die bislang für solche Zwecke verwendeten, aus der japanischen Offenlegungsschrift JP-A-55089538 bekannten Bodenbearbeitungsvorrichtungen besitzen zwei parallelogrammartig angeordnete Tragarme, die teleskopartig ausgebildet sind und denen jeweils eine Feder parallel geschaltet ist, so dass die Tragarme gegen Federkraft längenveränderlich sind. Die Tragarme sind am einen Ende an dem Maschinenrahmen und am anderen Ende an einem Werkzeughalter für Stechwerkzeuge angelenkt. Die Schubstange eines Kurbeltriebs ist am Werkzeughalter der Stechwerkzeuge angelenkt und treibt diesen an, so dass dieser mit den Stechwerkzeugen eine Auf- und Abbewegung ausführt. Beim Eindringen in den Boden können die Stechwerkzeuge durch Längenänderung der Tragarme entgegen der Fahrtrichtung der Bodenbearbeitungsvorrichtung verschwenkt werden.

Aus der Europäischen Offenlegungsschrift EP-A-0037595 ist eine weitere Bodenbearbeitungsvorrichtung bekannt, die zwei parallelogrammartig geführte Tragarme benutzt, die am einen Ende schwenkbar einen Werkzeughalter halten und die am anderen Ende am Maschinenrahmen schwenkbar gelagert sind. Die Schubstange des Kurbeltriebs ist an dem Werkzeughalter angelenkt und treibt diesen an, so dass dieser eine Auf- und Abbewegung ausführt. Einer der beiden Tragarme ist längenveränderlich und beinhaltet eine Anschlagfedereinrichtung. Solange sich das Stechwerkzeug außerhalb des Bodens befindet, liegt der Tragarm aufgrund der Federkraft an dem Anschlag an. Bei eingestochenem Stechwerkzeug und Vorwärtsbewegung der Bodenbearbeitungsvorrichtung verschwenkt das Stechwerkzeug mit dem Werkzeughalter entgegen der Fahrtrichtung und der längenveränderliche Tragarm wird gegen die Federkraft verlängert.

Die bisher bekannten Bodenbearbeitungsvorrichtungen sind aufwändige Konstruktionen mit vielen Maschinenteilen, die während des Stechvorgangs mitbewegt werden. Die Massenträgheit ist somit relativ hoch, so dass die Arbeitsgeschwindigkeit der Vorrichtungen begrenzt ist. Ein weiteres Problem besteht darin, dass die Stechwerkzeuge bzw. Maschinenelemente der bisher bekannten Bodenbearbeitungsvorrichtungen bei Böden, in denen sich beispielsweise größere Steine befinden, beschädigt werden können, wenn sie beim Einstechen auf Steine oder Ähnliches treffen.

Der Erfindung liegt demzufolge die Aufgabe zugrunde, eine Vorrichtung der eingangs beschriebenen Art zu schaffen, bei der weniger Maschinenteile während des Stechvorgangs mitbewegt werden und somit die Arbeitsgeschwindigkeit erhöht werden kann.

Zur Lösung dieser Aufgabe dienen die Merkmale des Anspruchs 1.

Die Erfindung sieht in vorteilhafter Weise vor, dass eine Bodenbearbeitungsvorrichtung der einleitend beschriebenen Art einen Maschinenrahmen, mindestens ein auf- und abbewegbares Stechwerkzeug, wobei das Stechwerkzeug in den Boden einstechbar und wieder herausziehbar ist, mindestens einen Werkzeughalter für das Stechwerkzeug und mindestens ein Führungselement aufweist. Der Werkzeughalter ist um eine erste Schwenkachse in dem von einem Antrieb auf- und abbewegbaren Führungselement gelagert. Zwischen dem Werkzeughalter und dem Führungselement ist ein Torsionselement koaxial zur ersten Schwenkachse angeordnet. Bei eingestochenem Stechwerkzeug und Weiterbewegung kann das Stechwerkzeug und somit der Werkzeughalter gegenüber dem Führungselement verschwenkt werden. Bei Wegfall der Krafteinwirkung, d.h. sobald sich das Stechwerkzeug außerhalb des Bodens befindet, wird ein Rückstellmoment auf den Werkzeughalter erzeugt, so dass der Werkzeughalter mit dem Stechwerkzeug aufgrund des Torsionsmoments wieder in die Ausgangslage zurückschwenkt.

Diese Ausführungsform hat den Vorteil, dass weniger Maschinenteile während der Einstechbewegung bewegt werden müssen und somit die Massenträgheit geringer ist. Die Stechwerkzeuge können somit, insbesondere während sie sich im Eingriff mit dem Boden befinden, schneller entgegen der Fahrtrichtung nachgeben. Die in der Bodenoberfläche entstehenden Löcher können daher kleingehalten werden, so dass sie nicht wesentlich größer sind als der Durchmesser des Einstechwerkzeugs.

Ein weiterer Vorteil besteht darin, dass keine Anschläge benötigt werden, um die Stechwerkzeuge in die Ausgangsposition vor dem Einstechen zurückzubringen. Somit fällt die Stoßbelastung auf den Maschinenrahmen, die Maschinenelemente und insbesondere deren Lager weg. Somit kann die Lebensdauer, insbesondere der Lager aber auch der Maschinenteile erhöht werden. Desweiteren werden im Betrieb auftretende Vibrationen in erheblichem Umfang reduziert.

Ein zusätzlicher Vorteil ist, dass die Bodenbearbeitungsvorrichtung, da sie keinen Anschlag besitzt, nicht nur vorwärts, sondern auch rückwärts unter Eingriff der Stechwerkzeuge bewegt werden kann. Bei den zu bearbeitenden Flächen sind die Eckbereich der zu bearbeitenden Flächen mit einer Bodenbearbeitungsvorrichtung in der Regel nur schwer zugänglich. Aufgrund der möglichen Rückwärtsfahrt können die Ecken besser erreicht werden.

Das Torsionselement kann aus einem Elastomerelement, z. B. einem Gummifederelement oder einer schrauben- bzw. spiralförmigen Torsionsfeder, z. B. einer metallischen Torsionsfeder bestehen. Vorzugsweise ist das Torsionselement ein Verbundelement und besteht sowohl aus einem Elastomer- als auch aus einem Metallwerkstoff.

Bei der Verwendung eines Elastomers oder einer Kombination aus Elastomer und Metall als Torsionselement besteht ein weiterer Vorteil darin, dass geringere Vibrationen auf die gesamte Bodenbearbeitungsvorrichtung und auf das Zugfahrzeug übertragen werden. Somit können Schwingungseinwirkungen auf Personen, die die Bodenbearbeitungsvorrichtung bedienen, deutlich reduziert werden.

Bei einer weiteren Ausgestaltung der Erfindung ist vorgesehen, dass das Führungselement, an dem der Werkzeughalter schwenkbar gelagert ist, längs einer an dem Maschinenrahmen befestigten Führung geführt ist. Diese Führung kann linear oder aber insbesondere im oberen Bereich gebogen ausgeführt sein, damit die von dem Kurbeltrieb auf die Führung ausgeübten Kräfte reduziert werden.

Der Winkel der Führung in einer zur Fahrtrichtung parallelen vertikalen Ebene kann relativ zum Maschinenrahmen einzeln oder zentral verstellt werden und es kann somit der Einstechwinkel der Stechwerkzeuge in den Boden eingestellt werden. Dies hat gegenüber dem bisherigen Stand der Technik den Vorteil, dass der Einstechwinkel ohne Verwendung eines Anschlags zentral verstellt werden kann, wenn alle Führungen der Führungselemente und somit der Stechwerkzeuge gemeinsam verstellt werden.

Bei weiteren Ausführungsbeispielen der Erfindung ist vorgesehen, dass bei der Bodenbearbeitungsvorrichtung mehrere Stechwerkzeuge oder mehrere Gruppen von Stechwerkzeugen nebeneinander angeordnet sind und diese zueinander phasenverschoben antreibbar sind.

Auch können diese Stechwerkzeuge oder Gruppen von Stechwerkzeugen in mindestens zwei Reihen in Fahrtrichtung hintereinander angeordnet sein. Es können mindestens zwei in Fahrtrichtung hintereinanderliegende Stechwerkzeuge oder Gruppen von Stechwerkzeugen mit dem gleichen Kurbeltrieb angetrieben werden, wobei diese Stechwerkzeuge bzw. Gruppen von Stechwerkzeugen vorzugsweise phasenverschoben angetrieben werden. Der Kurbeltrieb ist dabei so mit der Fahrgeschwindigkeit synchronisiert, dass die Stechwerkzeuge der beiden Reihen einen solchen Weg während der Phase, in der die Stechwerkzeuge nicht im Eingriff mit dem Boden sind, zurücklegen, dass die Stechwerkzeuge der zweiten Reihe in Fahrtrichtung vor den Löchern, die von den Stechwerkzeugen der ersten Reihe erzeugt worden sind, in den Boden einstechbar sind.

Dies hat den Vorteil, dass bei mehreren Reihen von hintereinander angeordneten Stechwerkzeugen die Arbeitsgeschwindigkeit der Bodenbearbeitungsvorrichtung erhöht werden kann.

Bei einer alternativen Ausführungsform der Erfindung können am Maschinenrahmen befestigte Anschläge vorgesehen sein, die zentral oder einzeln verstellt werden können und die Rückstellbewegung der Stechwerkzeuge begrenzen, um den Einstechwinkel zu verändern.

Bei einem weiteren Ausführungsbeispiel kann das Führungselement aus einem Tragarm bestehen, der an dem Maschinenrahmen schwenkbar befestigt ist. In diesem Fall kann bei einem Werkzeughalter ein schwenkbar gelagerter Kopplungsarm vorgesehen sein, der vor dem Einstechen in den Boden mit dem Anschlag in direktem Kontakt ist und an dem Werkzeughalter entfernten Ende an einem Zwischenelement schwenkbar gelagert ist, das seinerseits an dem Maschinenrahmen schwenkbar gelagert ist.

Bei einem weiteren Ausführungsbeispiel der Erfindung ist das Führungselement zweiteilig ausgebildet, wobei die beiden Teile des Führungselements in der gleichen Führung geführt werden. Zwischen dem oberen und dem unteren Führungselement ist mindestens eine Druckfeder angeordnet, die ein Einfedern des mindestens einen Stechwerkzeuges bei einem außergewöhnlich hohen Bodeneinstechwiderstand ermöglicht. Diese Feder soll eine hohe Federsteifigkeit besitzen und erst ab einer bestimmten Kraft einfedern. Bei normalen Bodenverhältnissen kann das Stechwerkzeug die vorgegebene Bewegung ungehindert ausführen, da die Federkraft der Druckfeder größer ist als der Bodeneinstechwiderstand üblicherweise bearbeiteter Böden ist. Dies hat den Vorteil, dass die Bodenbearbeitungsvorrichtung auch benutzt werden kann, wenn sich Steine oder Schotter im Boden befinden. Bei den bisher bekannten Bodenbearbeitungsvorrichtungen können die Stechwerkzeuge bzw. Maschinenelemente beschädigt werden, wenn die Stechwerkzeuge auf Steine oder Ähnliches treffen. Die Bodenbearbeitungsvorrichtung der vorliegenden Ausführungsform kann somit auch zum Bearbeiten von Skipisten verwendet werden, bei denen sich sehr häufig Steine oder Felsen unter der Schneedecke befinden.

Eine Weiterbildung der Erfindung kann vorsehen, dass die Höhe des Hubes, den das Führungselement und somit der Werkzeughalter ausführen, eingestellt werden kann. Die Verstellung lässt sich z. B. erreichen, indem der Abstand des Hubzapfens, der die Kurbelstange aufnimmt, zur Drehachse der Kurbelwelle verändert werden kann. In den Wangen, die die Hubzapfen mit den Kurbelwellenzapfen verbinden, befinden sich Langlöcher. Die Hubzapfen können innerhalb der Langlöcher verschoben werden und an unterschiedlichen Positionen befestigt werden.

Bei einer bevorzugten Ausführung kann alternativ die Höhe des Hubs verstellt werden, indem der Abstand zwischen Kurbelwelle und Führungselement, an dem der Werkzeughalter schwenkbar gelagert ist, verändert wird. Dies geschieht beispielsweise dadurch, dass eine andere horizontale Position des Führungselements relativ zur Kurbelwelle eingestellt wird.

Dieser horizontale Abstand kann ebenfalls einzeln oder zentral für mehrere nebeneinander angeordnete Stechwerkzeuge eingestellt werden. Ein Vorteil davon ist, dass die Werkzeuge nicht gewechselt werden müssen, wenn die Tiefe der in den Boden eingebrachten Hohlräume verändert werden soll.

Bei einem weiteren Ausführungsbeispiel der Erfindung ist vorgesehen, dass die Schubstange entgegen einer Federkraft stauchbar ausgeführt ist, wobei ein Einstechen ohne oder mit geringem Einfedern des mindestens einen Stechwerkzeugs bei üblichem Bodenwiderstand möglich ist und ein Einfedern des Stechwerkzeugs möglich ist, wenn der Bodenwiderstand erheblich höher ist als ein üblicherweise zu erwartender Bodenwiderstand, z.B. bei felsigem Untergrund.

Vorzugsweise wird die Federkraft durch ein Federelement aufgebracht, das bei dem letztgenannten Ausführungsbeispiel aus einem schrauben- bzw. spiralförmiger Zug- oder Druckfederelement besteht. Das Federelement kann aber auch ein Elastomer, ein Elastomer-Metall-Verbundelement oder eine mit Elastomer umspritzte Zug- oder Druckfeder sein.

Alternativ kann das Federelement eine pneumatische, hydraulische oder magnetische Zug- bzw. Druckfeder sein.

Bei einer Weiterbildung der Erfindung ist vorgesehen, dass das Torsionselement mindestens zwei magnetische Elemente aufweist. Die zwei magnetischen Elemente sind so zueinander ausgerichtet, dass sie bei einem um die erste Schwenkachse auf den Werkzeughalter einwirkenden Drehmoment ein Verschwenken des Werkzeughalters um die erste Schwenkachse zulassen und bei Wegfall des einwirkenden Drehmomentes ein magnetisches Rückstellmoment auf den Werkzeughalter ausüben, so dass das Stechwerkzeug in die Ausgangslage zurückschwenkt.

Ein solches um die erste Schwenkachse wirkendes Drehmoment tritt bei eingestochenem Stechwerkzeug und Weiterbewegung der Bodenbearbeitungsvorrichtung auf. Das einwirkende Drehmoment fällt somit weg, sobald sich das Stechwerkzeug wieder außerhalb des Bodens befindet.

Im Folgenden werden unter Bezugnahme auf die Zeichnungen Ausführungsbeispiele der Erfindung näher erläutert.

Es zeigen schamatisch:
- Fig. 1: eine Seitenansicht auf eine Bodenbearbeitungsvorrichtung,
- Fig. 2a: eine teilweise geschnittene Frontansicht auf ein erfindungsgemäßes Ausführungsbeispiel eines Stechwerkzeuges,
- Fig. 2b: eine Seitenansicht auf das Ausführungsbeispiel aus Fig. 2a
- Fig. 2c: eine teilweise geschnittene Frontansicht auf eine Variante des Ausführungsbeispiels aus Fig. 2a
- Fig. 3: eine Frontansicht eines weiteren Ausführungsbeispiels mit einem Elastomerelement als Torsionsfederelement, für ein Stechwerkzeug,
- Fig. 4: eine Seitenansicht eines weiteren Ausführungsbeispiels, bei dem eine spiral- bzw. schraubenförmige Torsionsfeder als Torsionselement verwendet ist,
- Fig. 5: eine Seitenansicht des ersten Ausführungsbeispiels mit einer schwenkbaren linearen Führung des Führungselementes,
- Fig. 6: eine Seitenansicht eines Ausführungsbeispiels mit eingestochenem Stechwerkzeug,
- Fig. 7: eine Seitenansicht eines weiteren Ausführungsbeispiels mit insbesondere im oberen Teil gebogener Führung,
- Fig. 8: eine Seitenansicht eines weiteren Ausführungsbeispiels mit veränderlichem Kreisbahndurchmesser des Kurbeltriebs,
- Fig. 9: eine Seitenansicht eines weiteren Ausführungsbeispiels mit zwei Reihen hintereinander angeordneten Stechwerkzeugen bzw. Gruppen von Stechwerkzeugen,
- Fig. 10: eine Frontansicht eines weiteren Ausführungsbeispiels, bei dem das Stechwerkzeug bei außergewöhnlich hohem Bodenwiderstand einfedern kann,
- Fig. 11: eine Frontansicht des Ausführungsbeispiels aus Fig. 10, bei dem das Stechwerkzeug eingefedert ist,
- Fig. 12: eine Seitenansicht eines weiteren Ausführungsbeispiels mit Tragarm,
- Fig. 13: eine Seitenansicht eines weiteren Ausführungsbeispiels mit Tragarm und Anschlag,
- Fig. 14: eine Seitenansicht eines weiteren Ausführungsbeispiels mit einer zweiteilig ausgeführten Schubstange,
- Fig. 15: eine Seitenansicht auf ein weiteres Ausführungsbeispiel mit ebenfalls zweiteilig ausgeführter Schubstange,
- Fig. 16: eine teilweise geschnittene Seitenansicht auf ein Ausführungsbeispiel eines Stechwerkzeuges mit einem aus zwei Magneten bestehenden Torsionselement.

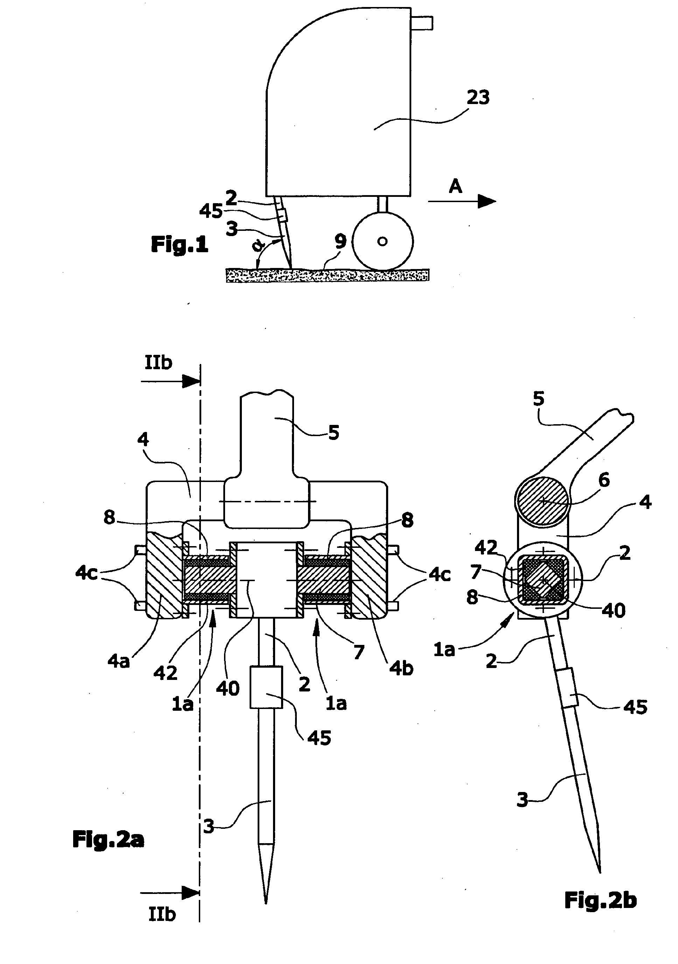

Fig. 1 zeigt eine Seitenansicht einer fahrbaren Bodenbearbeitungsvorrichtung, die selbstfahrend ist oder mit Hilfe einer Zugmaschine gezogen werden kann. Diese Bodenbearbeitungsvorrichtung weist einen Maschinenrahmen 23 auf, in dem mehrere auf und ab bewegbare Stechwerkzeuge 3 schwenkbar gelagert sind. Die Stechwerkzeuge 3 werden abwechselnd in den Boden 9 eingedrückt und führen in dem Boden 9 aufgrund der Vorwärtsbewegung der Bodenbearbeitungsvorrichtung eine Kippbewegung aus, bei der der Boden 9 unterhalb des Einstechlochs aufgebrochen wird, wodurch beispielsweise die Drainage des Bodens 9 verbessert wird. Dabei soll das Einstechloch trotz der Fahrgeschwindigkeit der Bodenbearbeitungsvorrichtung möglichst klein bleiben.

Die Stechwerkzeuge 3 werden vorzugsweise mit Hilfe einer Haltevorrichtung 45 an einem Werkzeughalter 2 befestigt. Stechwerkzeuge unterschiedlicher Länge und Form sowie Durchmesser können an dem Werkzeughalter 2 befestigt werden, der von einem Führungselement 4 geführt wird. Das Führungselement 4 führt vorzugsweise durch einen Kurbeltrieb 17 angetrieben eine Auf- und Abbewegung aus. Alternativ ist es auch möglich, das Führungselement 4 hydraulisch oder elektrisch anzutreiben.

An dem Führungselement 4 ist der Werkzeughalter 2 um eine Schwenkachse 40 schwenkbar gelagert, wobei der Werkzeughalter 2 ein Stechwerkzeug 3 oder eine Gruppe von Stechwerkzeugen 3 aufnimmt, die aufgrund der Auf- und Abbewegung in den Boden 9 einstechbar und wieder herausziehbar sind. Es können mehrere vorzugsweise nebeneinander angeordnete Stechwerkzeuge 3 oder nebeneinander angeordnete Gruppen von Stechwerkzeugen 3 angetrieben werden. Die Stechwerkzeuge bzw. Gruppen von Stechwerkzeugen werden bevorzugt phasenverschoben angetrieben.

Fig. 2a zeigt eine Frontansicht und Fig. 2b eine Seitenansicht auf ein Führungselement 4 mit Werkzeughalter 2 und Stechwerkzeug 3. Eine Schubstange 5 wird mit Hilfe eines Kurbeltriebs 17 angetrieben. Die Schubstange 5 ist mit einem ersten Schwenklager 6 mit dem Führungselement 4 gekoppelt. Das Führungselement 4 kann durch die Schubstange 5 angetrieben eine Auf- und Abbewegung längs einer Führung 11 ausführen. An dem Führungselement 4 ist der Werkzeughalter 2 um eine Schwenkachse 40 schwenkbar gelagert. An dem Werkzeughalter 2 ist mindestens ein Stechwerkzeug 3 angebracht. Zwischen dem Werkzeughalter 2 und dem Führungselement 4 ist ein zur Schwenkachse 40 koaxial wirkendes Torsionselement 1a angebracht. Das Führungselement 4 nimmt den Werkzeughalter 2 vorzugsweise zwischen zwei Armen 4a, 4b auf, die mit Hilfe von seitlichen Führungszapfen 4c in der Führung 11 geführt sind.

Vor dem Einstechen ist das Torsionselement unbelastet, wobei in der Ausgangslage kurz vor dem Einstechen ein vorbestimmter Einstechwinkel des Stechwerkzeuges 3 eingestellt ist. Das Torsionselement lässt unter Krafteinwirkung auf das Stechwerkzeug 3, d.h. bei eingestochenem Stechwerkzeug 3 und Weiterbewegung der Bodenbearbeitungsvorrichtung in Fahrtrichtung A, ein Verschwenken des Stechwerkzeuges 3 entgegen der Fahrtrichtung zu. Bei Wegfall der Krafteinwirkung, d.h. nach dem Herausziehen des Stechwerkzeuges 3 aus dem Boden 9, übt das Torsionselement ein Rückstellmoment auf den Werkzeughalter 2 aus, so dass das Stechwerkzeug 3 nach dem Herausziehen wieder in die Ausgangslage zurückschwenkt.

Das Torsionselement in Fig. 2a und 2b kann ein Metall-Elastomer-Verbundelement 1a sein, wie es beispielsweise von der Firma Rosta erhältlich ist. Das Elastomer-Metall-Verbundelement weist ein Gehäuse 8 auf, das vorzugsweise aus einem viereckigen bzw. dreieckigen Hohlprofil besteht. Weiter weist das Elastomer-Metall-Verbundelement eine zentrale Stange 7 auf, die sich im Inneren des Gehäuses 8 befindet und ebenfalls vorzugsweise einen viereckigen bzw. dreieckigen Querschnitt besitzt. Alternativ kann sowohl bei dem Gehäuse 8 als auch bei der Stange 7 ein allgemein polygoner Querschnitt verwendet werden.

Beispielsweise bei im wesentlichen quadratischen Profilen des Gehäuses 8 und der Stange 7 ist die Stange 7 gegenüber dem Gehäuse 8 um einen Drehwinkel von 45° versetzt angeordnet. Zwischen dem Gehäuse 8 und der Stange 7 sind Elastomerelemente 42 in den Ecken des Gehäuses 8 angeordnet und erstrecken sich im Wesentlichen über die gesamte Länge des Gehäuses 8 und der Stange 7. Unter Einwirkung eines Drehmomentes kann die Stange 7 gegenüber dem Gehäuse 8 verdreht werden. Dabei werden die Elastomerelemente 42 komprimiert und es entsteht ein elastisches Rückstellmoment. Bei einer im Querschnitt dreieckigen Form des Gehäuses 8 und der Stange 7 kann ein größerer Torsionswinkel genutzt werden.

In Fig. 2a und Fig. 2b ist die Stange 7 mit dem Werkzeughalter 2 und das Gehäuse 8 mit dem Führungselement 4 drehfest verbunden.

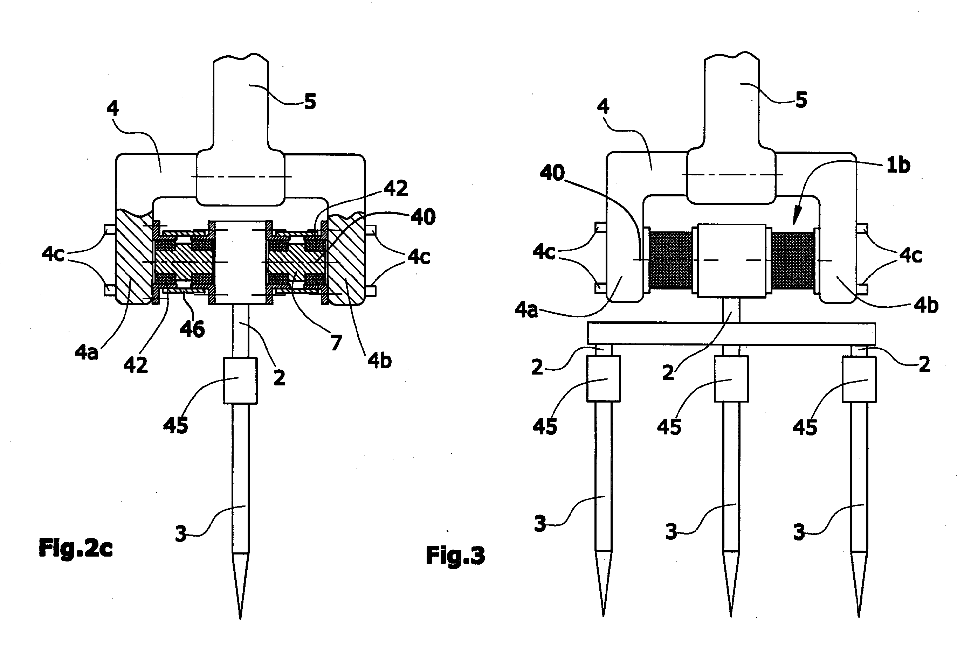

In Fig. 2c sind zwei miteinander gekoppelte Elastomer-Metall-Verbundelemente 1a nebeneinander angeordnet, um einen größeren Torsionswinkel zu erreichen. Die beiden Stangen 7 sind fest verbunden oder vorzugsweise einstückig ausgebildet. Eines der beiden Gehäuse 8 ist am Führungselement 4 und das andere Gehäuse 8 am Werkzeughalter 2 befestigt. Um vertikale Kräfte besser aufnehmen zu können, kann eine Hülse 46 vorgesehen sein, die die beiden Gehäuse 8 umschließt.

Alternativ können auch die beiden Gehäuse 8 anstatt der Stange 7 fest miteinander verbunden sein oder vorzugsweise einstückig, sowie die Stange 7 zweiteilig ausgebildet sein. In diesem Fall ist eine der Stangen 7 mit dem Führungselement 4 und die andere Stange 7 mit dem Werkzeughalter 2 drehfest verbunden.

Der Einstechwinkel des Stechwerkzeuges 3 in den Boden entspricht dem Winkel α zwischen Stechwerkzeug 3 und der Bodenoberfläche 9. Dieser Winkel kann verändert werden, indem der Winkel des Werkzeughalters 2 bezüglich einer orthogonalen Ebene quer zur Fahrtrichtung verändert wird.

In Fig. 3 ist ein weiteres Ausführungsbeispiel dargestellt, bei dem ein Elastomerelement 1b als Torsionselement verwendet wird. In diesem Ausführungsbeispiel sind die Elastomerelemente beidseitig quer zur Fahrtrichtung zwischen dem Werkzeughalter 2 und dem Führungselement 4 angeordnet. An dem Werkzeughalter 2 können mehrere Stechwerkzeuge 3 befestigt sein. Die Enden der Elastomerelemente sind direkt am Führungselement 4 bzw. am Werkzeughalter 2 befestigt.

Die Elastomerelemente können an den Enden als Verbundelemente z.B. anvulkanisierte Anschlussflansche 10 aufweisen, die können ihrerseits am Werkzeughalter 2 bzw. am Führungselement 4 befestigt sein. Der Einstechwinkel α kann auch dadurch verändert werden, indem der Winkel zwischen den Einstechwerkzeugen und dem Werkzeughalter 2 beim Befestigen der Einstechwerkzeuge verändert wird.

Der maximal mögliche Torsionswinkel zwischen dem Führungselement 4 und dem Werkzeughalter 2 ist von der Länge L der Elastomerelemente 1b abhängig. Je länger das Elastomerelement 1b ist, desto größer kann der Torsionswinkel sein. Zum Verstärken des Elastomerelementes 1b kann parallel zu seiner Längserstreckung im Inneren ein vorzugsweise koaxialer Metallbolzen eingebracht sein. Dieser kann an den angrenzenden Anschlussflanschen 10 oder am Werkzeughalter 2 und/oder am Führungselement 4 drehbar gelagert sein.

Auch ist ein Verbundelement aus Elastomerelementen und spiral- bzw. schraubenförmigen Metalltorsionsfedern möglich. Die Metallfedern sind in diesem Fall vom Elastomermaterial umschlossen. Auch hier können zur Verstärkung Metallbolzen im Inneren vorzugsweise koaxial eingebracht sein.

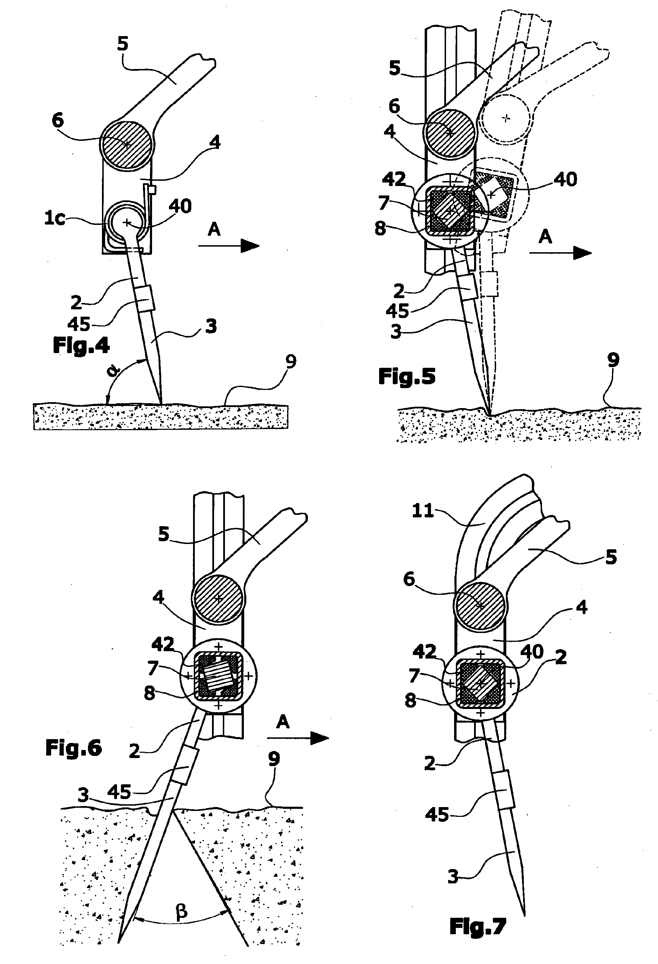

Die Seitenansicht in Fig. 4 zeigt die gleiche Ausführungsform wie sie in Fig.2a und 2b dargestellt ist, mit dem Unterschied, dass das Torsionselement eine koaxial zur Schwenkachse 40 verlaufende spiral- bzw. schraubenförmige Metalltorsionsfeder 1c ist. Die eine Seite der Metallfeder ist mit dem Führungselement 4 und die andere Seite ist mit dem Werkzeughalter 2 drehfest verbunden. Es ist hier auch möglich zur Verstärkung ein koaxiales achsen- oder hülsenförmiges Stützelement zu verwenden. Diese Stützelemente können dann ebenfalls am Werkzeughalter und am Führungselement drehbar gelagert sein.

Die Seitenansicht in Fig. 5 zeigt eine der Führungen 11, die das Führungselement 4 seitlich beidseitig führen. Die mindestens eine Führung 11 ist an dem in Fig. 5 nicht dargestellten Maschinenrahmen 23 befestigt. Die Führung 11 ist in einer zur Fahrtrichtung parallelen Vertikalebene kippbar (gestrichelte Zeichnung), so dass der Winkel der Führung 11 relativ zum Maschinenrahmen 23 verstellt werden kann. Damit wird auch der Einstechwinkel α der Stechwerkzeuge 3 in der Vertikalebene verstellt. Die Winkel mehrerer quer zur Fahrtrichtung nebeneinander in einer Reihe angeordneten Führungen 11 können zentral mit Hilfe einer Verstelleinrichtung verstellbar sein. Somit sind auch die Einstechwinkel der Stechwerkzeuge bzw. Gruppen von Stechwerkzeugen, die sich in einer Reihe befinden, zentral verstellbar.

Die nebeneinander angeordneten Stechwerkzeuge oder Gruppen von Stechwerkzeugen sind phasenverschoben antreibbar. Die Führungen 11 können auch horizontal parallel zur Fahrtrichtung verschiebbar sein, so dass der Hub der Auf- und Abbewegung aufgrund des veränderten Abstandes zum Kurbeltrieb 17 verstellbar ist. In der Fig. 5 ist das Stechwerkzeug kurz vor dem Einstechen in den Boden 9 dargestellt.

Fig. 6 zeigt die gleiche Seitenansicht wie Fig. 5 mit dem Unterschied, dass sich die Bodenbearbeitungsvorrichtung in Fahrtrichtung weiterbewegt hat. Das Stechwerkzeug 3 befindet sich im Boden 9 und ist aufgrund der Vorwärtsfahrt verschwenkt worden. Das Stechwerkzeug 3 hat dabei bisher eine Schwenkbewegung um einen Winkel β ausgeführt.

Fig. 7 zeigt eine Seitenansicht, bei der eine insbesondere im oberen Bereich gebogene Führung 11 gezeigt wird. Die Führung 11 ist in Richtung des Kurbeltriebes 17 gebogen, so dass der Winkel der Krafteinwirkung, die von der Schubstange 5 über das Führungselement 4 auf die Führung 11 ausgeübt wird, so verändert wird, dass die Belastung der Führung 11 durch Querkräfte verringert wird. Auf diese Weise wird der Verschleiß und die Reibung reduziert.

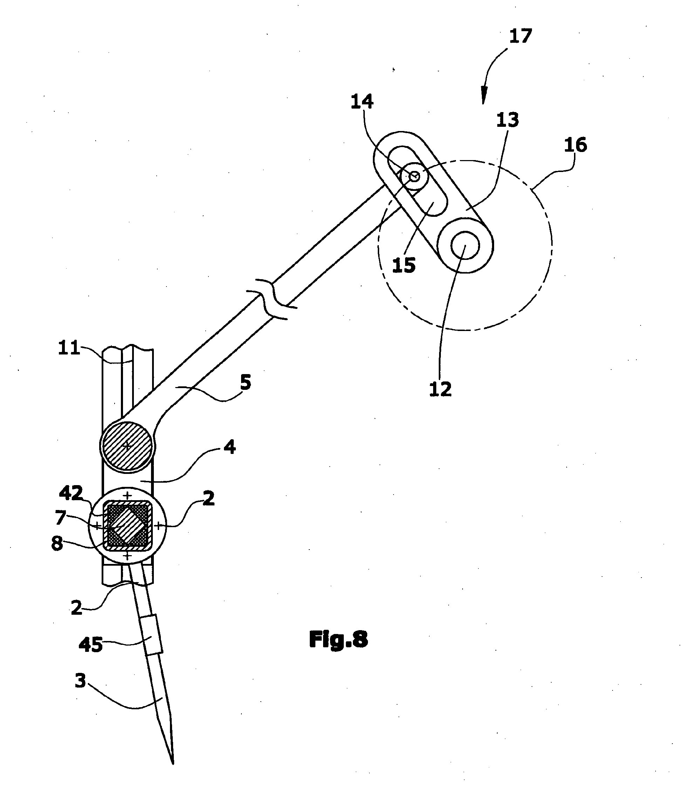

Fig. 8 zeigt eine Seitenansicht eines Ausführungsbeispiels mit linearer Führung 11. Die Wangen 13 des Kurbeltriebs 17 verbinden Hubzapfen 14 mit einer Kurbelwelle 12. Die Hubzapfen 14 nehmen die Schubstange 5 auf. Die Wangen 13 sind bei diesem Ausführungsbeispiel mit Langlöchern 15 versehen, so dass der wirksame Radius um die Drehachse der Kurbelwelle 12 verändert werden kann. Hierzu kann das kurbeltriebseitige Ende der Schubstange 5 in unterschiedlichen radialen Positionen befestigt werden. Durch die Veränderung des wirksamen Radiusses kann der Hub der Auf- und Abbewegung der Führungselemente 4 verändert werden. Die Kreisbahn, die der Hubzapfen 14 um die Kurbelwelle 12 ausführt, ist durch die Kreisbahn 16 gekennzeichnet.

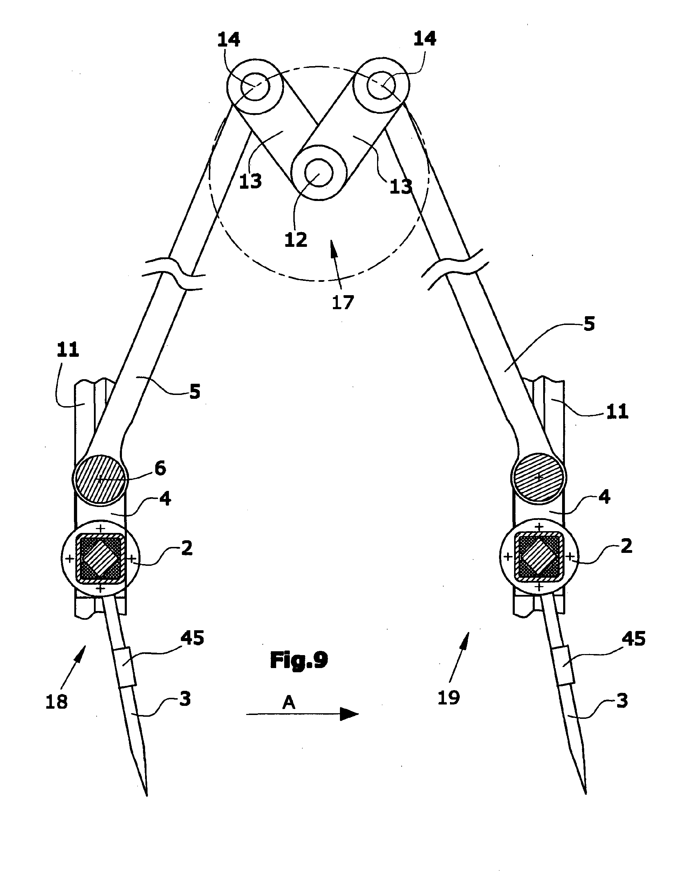

Fig. 9 zeigt eine Seitenansicht, in der zwei Reihen 18 und 19 von Stechwerkzeugen bzw. Gruppen von Stechwerkzeugen zu sehen sind, die in Fahrtrichtung hintereinander angeordnet sind, die von einem gemeinsamen Kurbeltrieb 17 angetrieben werden.

An dem Kurbeltrieb 17 nehmen zwei vorzugsweise winkelmäßig versetzte Hubzapfen 14 jeweils eine Schubstange 5 auf. Die Stechwerkezuge 3 in den Reihen 18 und 19 werden vorzugsweise phasenverschoben angetrieben. Der Kurbeltrieb 17 kann dabei so mit der Fahrgeschwindigkeit gekoppelt sein, dass die von den Stechwerkzeuge 3 der in Fahrtrichtung hinteren Reihe 18 erzeugten Löcher vor den zuvor erzeugten Löchern der Stechwerkzeuge 3 der ersten Reihe 19 liegen.

In den Fig. 4 bis 9 wurde jeweils das Elastomer-Metallverbundselement 1a des ersten Ausführungsbeispiels gezeigt. Alternativ ist es auch möglich, die beschriebenen alternativen Torsionselemente in allen Ausführungsbeispielen zu verwenden.

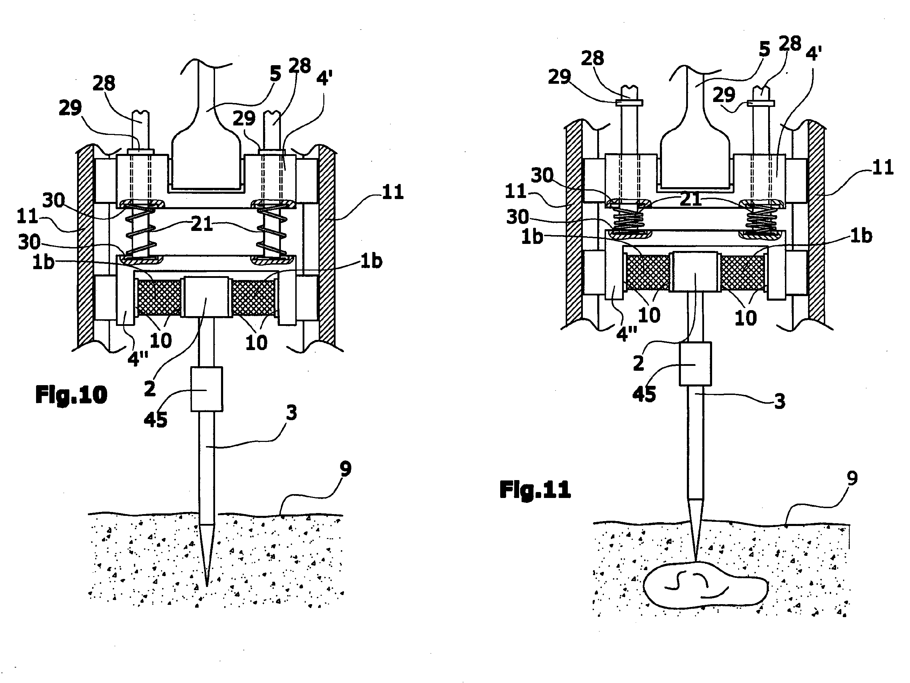

Die Fig. 10 zeigt die Frontansicht eines weiteren Ausführungsbeispiels, bei dem das Führungselement 4 zweiteilig ausgebildet, wobei die beiden Teile des Führungselements 4', 4" in der gleichen Führung geführt werden. Zwischen dem oberen 4' und dem unteren 4" Führungselement ist mindestens eine Druckfeder 21 angeordnet. Die beiden Teile des Führungselements 4', 4" sind aufgrund der Federn 21 gegeneinander vorgespannt, wobei Stäbe 28 den von den Federn 21 bewirkten Abstand zwischen den beiden Teilen des Führungselements 4', 4" begrenzen und die Federn vorspannen. Diese Stäbe 28 sind vorzugsweise koaxial zu den Federn 21 angeordnet und dienen dabei auch als Führungselemente für die Federn 21. In den beiden Teilen des Führungselements 4', 4" können Einbuchtungen 30 vorgesehen sein, um eine Feder 21 aufzunehmen. An dem Führungselement 4' ist die Schubstange 5 schwenkbar gelagert.

In Fig. 10 ist das Stechwerkzeug 3 im eingestochenen Zustand gezeichnet. Dieses Ausführungsbeispiel hat den Vorteil, dass wenn ein unüblich hoher Widerstand im Boden auftritt, d.h. wenn z.B. das Stechwerkzeug auf einen Stein trifft, die Federn 21 wie aus Fig. 11 ersichtlich einfedern können. Der maximale Federweg der Federn 21 ist an die maximale Einstechtiefe der Stechwerkzeuge 3 angepasst. Insoweit sind die Fig. 10 und 11 nicht maßstäblich sondern nur schematisch. Auf diese Weise werden Beschädigungen der Maschine oder des Werkzeuges verhindert. Die Federn besitzen eine hohe Federsteifigkeit, so dass sie erst ab einer relativ hohen Krafteinwirkung einfedern, nämlich wenn der Bodeneinstechwiderstand ein übliches Maß erheblich überschreitet. Muttern oder Distanzscheiben 29 dienen zur Einstellung einer vorbestimmten Vorspannkraft, die durch den Bodenwiderstand überwunden werden muss, damit das Stechwerkzeug einfedert. Die Vorspannkraft ist somit höher eingestellt als die erforderliche Einstellkraft der Stechwerkzeuge 3 zur Überwindung der Bodenwiderstandskraft bei bestimmungsgemäßen Gebrauch der Bodenbearbeitungsvorrichtung z. B. auf Sport- und Rasenflächen.

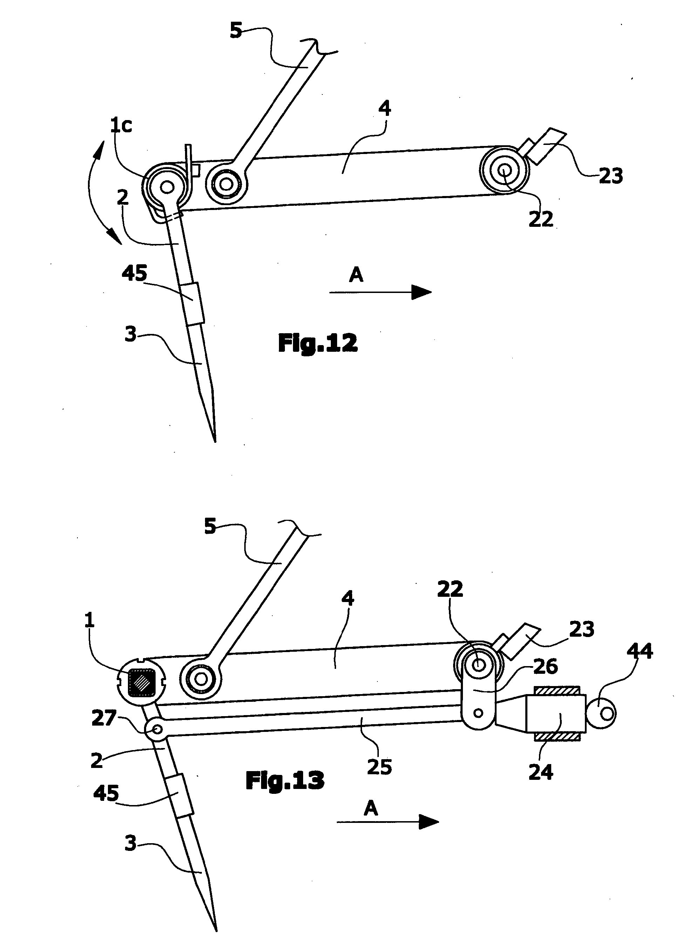

In Fig. 12 ist ein Ausführungsbeispiel mit Tragarmen 4 dargestellt. In diesem Fall besteht das Führungselement 4 aus mindestens einem Tragarm 4, der schwenkbar in einem Schwenklager 22 am Maschinenrahmen 23 befestigt ist. Der Einstechwinkel kann am Werkzeughalter 2 verstellt werden, indem der Werkzeughalter 2 in einer anderen Winkelstellung relativ zum Tragarm 4 befestigt wird.

Fig. 13 zeigt ein abgewandeltes Ausführungsbeispiel der Fig. 12, bei dem zusätzlich ein Kopplungsarm 25 an dem Werkzeughalter 2 zum zentralen Verstellen des Einstechwinkels schwenkbar gelagert ist, der vor dem Einstechen in den Boden mit dem Anschlag 24 in direktem Kontakt ist und der an dem von dem Werkzeughalter entfernten Ende schwenkbar an dem Zwischenelement 26 gelagert ist, das seinerseits schwenkbar an dem Maschinenrahmen 23 gelagert ist. Der Anschlag 24 kann beispielsweise mit einer exzentrisch gelagerten Stange 44 zentral verstellt werden. Der Anschlag 24 begrenzt die Rückstellbewegung der Stechwerkzeuge 3 zurück in die Ausgangslage. Somit kann der Einstechwinkel der Stechwerkzeuge 3 zentral verstellt werden. Alternativ kann der Einstechwinkel auch einzeln verstellt werden, indem die Anschlageinrichtung direkt auf dem Tragarm 4 befestigt wird.

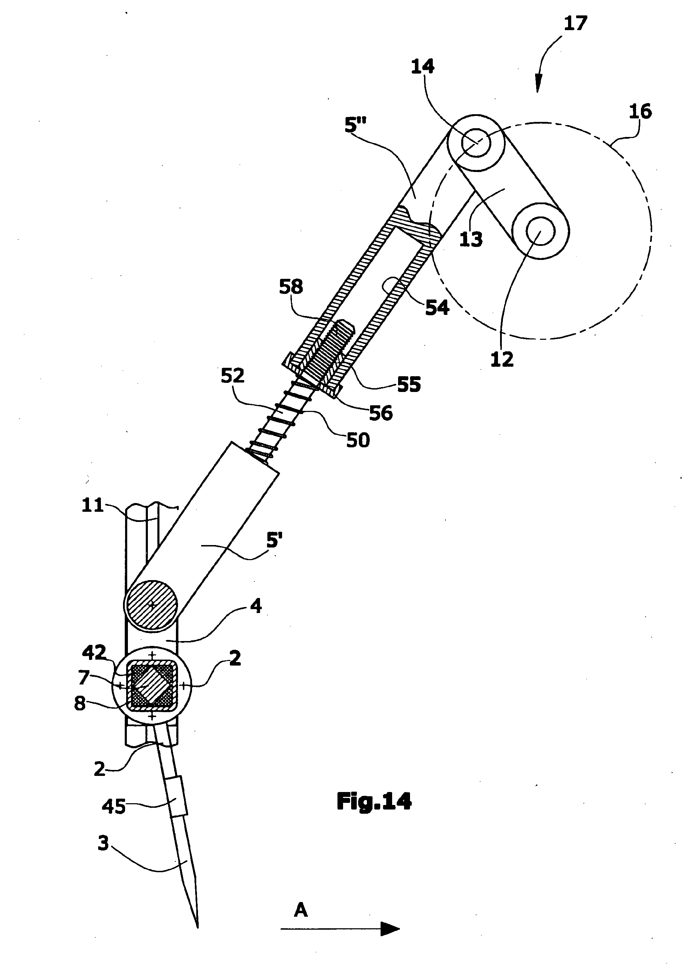

Fig. 14 zeigt ein weiteres Ausführungsbeispiel mit einer zweigeteilten, stauchbaren Schubstange 5. Zwischen den beiden Teilen 5',5" der Schubstange 5 ist ein Federelement 50 in Form einer Druckfeder angeordnet, das ein Einfedern der Schubstange 5 und damit indirekt des Stechwerkzeugs 3 ermöglicht. Der obere Teil 5" der Schubstange 5 ist mit dem Kurbeltrieb und der untere Teil 5' der Schubstange 5 ist mit dem Führungselement 4 verbunden. Das Führungselement 4 wird längs der Führung 11 geführt.

Das Federelement 50 ist eine schrauben- bzw. spiralförmige Druckfeder, die auf einer mit dem unteren Teil 5' der Schubstange 5 befestigten Kolbenstange 52 sitzt. Die beiden Teile 5',5" der Schubstange 5 sind teleskopartig ausgeführt. Es ist ein Kolben- und Einstellelement 55 vorgesehen, das das Federelement 50 variabel einstellbar vorspannt und den unteren Teil 5' der Schubstange 5 innerhalb einer Bohrung 54 des oberen Teils 5" der Schubstange 5 führt. Das hülsenförmige Kolben- und Einstellelement 55 weist eine glatte äußere Mantelfläche auf, so dass es als Kolbenelement in der Bohrung 54 des oberen Teils 5" der Schubstange 5 dienen kann. Ein Innengewinde des Kolben- und Einstellelementes 55 ermöglicht es, die Vorspannkraft variabel einzustellen. Die Höhe der Vorspannkraft hängt davon ab, wie weit das Kolben- und Einstellelement 55 auf einem Gewindebolzen 58 am Ende der Kolbenstange 52 aufgeschraubt ist.

Das Federelement 50 ist vorgespannt und soll eine hohe Federsteifigkeit besitzen, so dass es erst einfedert, wenn die zwischen den Teilen 5',5" einwirkende Stauchkraft höher ist, als die eingestellte Vorspannkraft, und die jedenfalls geringer ist als die Gewichtskraft der Bodenbearbeitungsvorrichtung. Bei üblichen Bodenverhältnissen kann das Stechwerkzeug 3 die vorgegebene Bewegung ungehindert ausführen, da die Federkraft der Druckfeder 50 größer ist als der Bodeneinstechwiderstand üblicherweise zu bearbeitender Böden. Die Federeigenschaften sind einerseits an die erforderliche Einstellkraft der Stechwerkzeuge 3 und andererseits an das Gewicht der Bodenbearbeitungsvorrichtung angepasst.

Die Arbeitsweise der vorgespannten Druckfeder 50 entspricht den bereits in Verbindung mit den Federn 21 der Fign. 10 und 11 erläuterten Arbeitsweise.

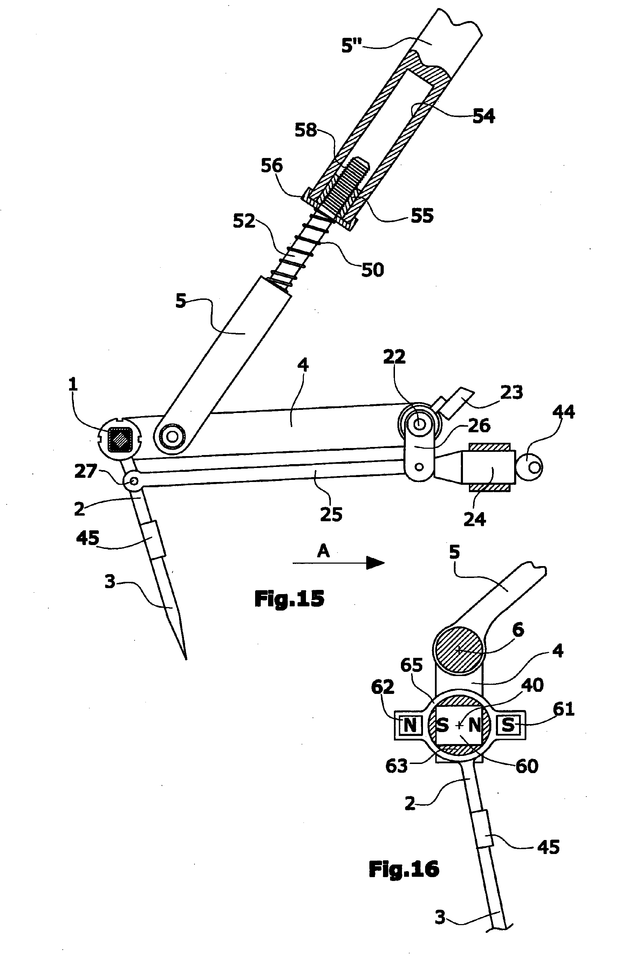

Fig. 15 zeigt ebenfalls die zweiteilige teleskopierbare Schubstange 5',5" mit dem dazwischen angeordneten Federelement 50. In diesem Ausführungsbeispiel ist das Führungselement 4 jedoch als Tragarm ausgeführt.

Fig. 16 zeigt ein weiteres Ausführungsbeispiel mit einem Torsionselement, das mindestens zwei magnetische Elemente aufweist. Das eine magnetische Element 60 befindet sich innerhalb eines achsenförmigen Halteelementes 63 und ist mit diesem drehfest verbunden. Das Halteelement 63 ist mit dem Führungselement 4 drehfest verbunden. Das Halteelement 63 weist einen runden Querschnitt auf. Das Halteelement 63 wird von mindestens einem weiteren beweglichen magnetischen Element 65 umschlossen, das mit dem Werkzeughalter 2 fest verbunden ist. Der Werkzeughalter 2 kann um die erste Schwenkachse 40 relativ zu dem als Schwenklager dienenden Halteelement 63 verschwenkt werden. Der Nordpol 62 und Südpol 61 des zweiten magnetischen Elementes 65 sind getrennt voneinander um 180° in Bezug auf die erste Schwenkachse 40 versetzt angeordnet. Das bewegliche magnetische Element 65 kann auch über ein elektrisch isoliertes Wälzlager auf dem Halteelement gelagert sein, z. B. über ein Wälzlager mit keramischen Elementen.

Solange sich das Stechwerkzeug 3 in der Ausgangs- und Ruhelage befindet, ist der Nordpol 62 des zweiten magnetischen Elementes 65 auf der Seite des Südpols des ersten magnetischen Elementes 60 und der Südpol 61 des zweiten magnetischen Elementes 65 auf der Seite des Nordpols des ersten magnetischen Elementes 60 angeordnet.

Bei eingestochenem Stechwerkzeug 3 und Weiterbewegung der Bodenbearbeitungsvorrichtung wird der Werkzeughalter 2 entgegen eines magnetischen Momentes um die erste Schwenkachse 40 relativ zu dem Haltelement 63 verschwenkt. Sobald sich das Stechwerkzeug 3 außerhalb des Bodens befindet, bewirkt das magnetische Rückstellmoment der magnetischen Elemente 60, 65, dass sich das Steckwerkzeug 3 wieder in die Ausgangslage zurückbewegt.

Die magnetischen Elemente 60, 65 können aus Dauer- oder aus Elektromagneten bestehen. Im Falle eines Elektromagneten besteht die Möglichkeit, den Strom nur in bestimmten Bewegungsphasen einzuschalten, z. B. in denen sich das Stechwerkzeug nicht in Kontakt mit dem Boden befindet.

Das Halteelement 63 und das Führungselement besteht vorzugsweise aus nicht bzw. schlecht magnetisierbarem Material, wie z.B. nicht magnetisierbarer Stahl (U-Boot-Stahl), hochfeste Metalle, Kunststoff, vorzugsweise Duroplast oder aus keramischem Material.

## Patentansprüche

1. Fahrbare Bodenbearbeitungsvorrichtung, mit
- einem Maschinenrahmen (23),
- einem Antrieb für mindestens ein auf- und abbewegbares Stechwerkzeug (3), wobei das Stechwerkzeug (3) in den Boden einstechbar und wieder herausziehbar ist,
- einem an dem Maschinenrahmen (23) beweglich geführten Führungselement (4) für mindestens ein Stechwerkzeug (3),
- einem Werkzeughalter (2) für das Stechwerkzeug (3), der um eine erste Schwenkachse (40) in dem von dem Antrieb auf- und abbewegbaren Führungselement (4) gelagert ist, um während des Bodeneingriffs ein Verschwenken des Stechwerkzeugs (3) entgegen einer Federkraft zu ermöglichen,
**dadurch gekennzeichnet,**
**dass** koaxial zu der ersten Schwenkachse (40) zwischen dem Werkzeughalter (2) und dem Führungselement (4) ein Torsionselement (1a, 1b, 1c) angeordnet ist, das unter Krafteinwirkung auf das mindestens eine Stechwerkzeug (3) ein Verschwenken des Werkzeughalters (2) relativ zu dem Führungselement (4) zulässt und bei Wegfall der Krafteinwirkung ein Rückstellmoment auf den Werkzeughalter (2) ausübt, so dass das Stechwerkzeug (3) nach dem Herausziehen aus dem Boden wieder in die Ausgangslage zurückschwenkt.

2. Bodenbearbeitungsvorrichtung nach Anspruch 1, **dadurch gekennzeichnet, dass** das Torsionselement aus mindestens einem Elastomerelement oder einem Elastomer-Metall-Verbundelement (1a, 1b) besteht, das an dem einen axialen Ende mit dem Führungselement (4) und an dem anderen axialen Ende mit dem Werkzeughalter (2) drehfest verbunden ist.

3. Bodenbearbeitungsvorrichtung nach Anspruch 1, **dadurch gekennzeichnet, dass** das Torsionselement eine schrauben- oder spiralförmige metallische Torsionsfeder (1c) ist.

4. Bodenbearbeitungsvorrichtung nach Anspruch 1, **dadurch gekennzeichnet, dass** das Torsionselement eine mit Elastomer umschlossene schrauben-oder spiralförmige metallische Torsionsfeder ist.

5. Bodenbearbeitungsvorrichtung nach einem der Ansprüche 1 bis 4, **dadurch gekennzeichnet, dass** das Führungselement (4) längs einer an dem Maschinenrahmen (23) befestigten Führung (11) geführt ist.

6. Bodenbearbeitungsvorrichtung nach Anspruch 5, **dadurch gekennzeichnet, dass** der Winkel der Führung (11) in einer in Fahrtrichtung verlaufenden Vertikalebene zum Einstellen eines Einstechwinkels für die Stichwerkzeuge (3) verstellbar ist.

7. Bodenbearbeitungsvorrichtung nach Anspruch 6, **dadurch gekennzeichnet, dass** der Winkel der linearen Führung (11) relativ zum Maschinenrahmen (23) zum Einstellen eines Einstechwinkels zentral verstellbar ist.

8. Bodenbearbeitungsvorrichtung nach einem der vorherigen Ansprüche, **dadurch gekennzeichnet, dass** mindestens zwei Reihen (18, 19) von Stechwerkzeugen oder Gruppen von Stechwerkzeugen in Fahrtrichtung hintereinander angeordnet sind.

9. Bodenbearbeitungsvorrichtung nach den Ansprüchen 1 bis 4, **dadurch gekennzeichnet, dass** das Führungselement (4) ein Tragarm ist, der in einem zweiten Schwenklager (22) an dem Maschinenrahmen (23) schwenkbar befestigt ist.

10. Bodenbearbeitungsvorrichtung nach einem der vorherigen Ansprüche, **dadurch gekennzeichnet, dass** mehrere Stechwerkzeuge (3) oder mehrere Gruppen von Stechwerkzeugen (3) nebeneinander angeordnet sind.

11. Bodenbearbeitungsvorrichtung nach Anspruch 10, **dadurch gekennzeichnet, dass** die nebeneinander angeordneten Stechwerkzeuge (3) oder Gruppen von Stechwerkzeugen (3) zueinander phasenverschoben antreibbar sind.

12. Bodenbearbeitungsvorrichtung nach einem der vorherigen Ansprüche, **dadurch gekennzeichnet, dass** eine zentrale Verstelleinrichtung für den Einstechwinkel der Stechwerkzeuge (3) mit mindestens einem zentral verstellbaren Anschlag (24) vorgesehen ist, wobei der mindestens eine Anschlag (24) am Maschinenrahmen (23) befestigt ist und die Bewegung der Stechwerkzeuge (3) aufgrund des Rückstellmomentes zurück in die Ausgangslage begrenzt.

13. Bodenbearbeitungsvorrichtung nach Anspruch 12, **dadurch gekennzeichnet, dass** mindestens ein Kopplungsarm (25) an dem Werkzeughalter (2) schwenkbar gelagert ist, der vor dem Einstechen in den Boden mit dem Anschlag (24) in direktem Kontakt ist und an dem Werkzeughalter (2) entfernten Ende an einem Zwischenelement (26) schwenkbar gelagert ist, das seinerseits an dem Maschinenrahmen (23) schwenkbar gelagert ist.

14. Bodenbearbeitungsvorrichtung nach eine der Ansprüche 1 bis 13, **dadurch gekennzeichnet, dass** die Höhe des Hubs, den das Führungselement (4) ausführt, einstellbar ist.

15. Bodenbearbeitungsvorrichtung nach einem der Ansprüche 1-12, **dadurch gekennzeichnet, dass** das Führungselement (4',4") zweiteilig ausgebildet ist, wobei das obere Führungselement (4') mit dem Antrieb (17) gekoppelt ist, und das untere Führungselement (4") den Werkzeughalter (2) trägt, wobei zwischen dem oberen und dem unteren Führungselement (4',4") mindestens eine Druckfeder (21) angeordnet ist die ein Einstechen des mindestens einen Stechwerkzeugs (3) bei einem normalen Bodenwiderstand ermöglicht und ein Einfedern des Stechwerkzeugs (3) ermöglicht, wenn der Bodenwiderstand erheblich höher ist als ein normaler Bodenwiderstand.

16. Bodenbearbeitungsvorrichtung nach einem der vorherigen Ansprüche, **dadurch gekennzeichnet, dass** die Schubstange (5',5") entgegen einer Federkraft stauchbar ausgebildet ist, wobei ein Einstechen des mindestens einen Stechwerkzeugs (3) bei einem üblichen Bodenwiderstand und ein Einfedern des Stechwerkzeugs (3) möglich ist, wenn der Bodenwiderstand erheblich höher ist als ein üblicher Bodenwiderstand.

17. Bodenbearbeitungsvorrichtung nach Anspruch 16, **dadurch gekennzeichnet, dass** ein Federelement (50) die Federkraft erzeugt, wobei das Federelement (50) aus einer schrauben- oder spiralförmigen Druck- oder Zugfeder oder aus einem Elastomer-Metall-Verbund oder aus Elastomer besteht.

18. Bodenbearbeitungsvorrichtung nach einem der Ansprüche 1 - 17, **dadurch gekennzeichnet, dass** das Torsionselement mindestens zwei magnetische Elemente (60, 65) aufweist, wobei die mindestens zwei magnetischen Elemente (60, 65) so zueinander ausgerichtet sind, das sie ein Verschwenken des Werkzeughalters (2) um die erste Schwenkachse (40) zulassen und bei Wegfall des Bodeneingriffs ein magnetisches Rückstellmoment auf den Werkzeughalter (2) ausüben, so dass das Stechwerkzeug (3) nach dem Herausziehen aus dem Boden wieder in die Ausgangslage zurückschwenkt.

19. Bodenbearbeitungsvorrichtung, nach Anspruch 18, **dadurch gekennzeichnet, dass** die magnetischen Elemente aus Dauer- oder aus Elektromagneten bestehen.

## Claims

1. A mobile soil working device, comprising:
- a machine frame (23),
- a drive for at least one penetration tool (3) adapted for up and down movement, the penetration tool (3) being adapted to be driven into the soil and to be pulled out again,
- a guide element (4) for at least one penetration tool (3), the guide element being guided movably at the machine frame (23),
- a tool holder (2) for the penetration tool (3), which is supported for pivotal movement about a first pivot axis (40) in the guide element (4) movable up and down by the drive, so as to allow a pivoting of the penetration tool (3) against a spring force while the tool is in the soil,
**characterized in that**
between the tool holder (2) and the guide element (4) a torsion element (1a, 1b, 1c) is provided coaxially with the first pivot axis (40), which torsion element, under a force effect on the at least one penetration tool (3), allows the tool holder (2) to pivot relative to the guide element (4) and, when the force effect ceases, exerts a restoring moment on the tool holder (2) so that the penetration tool (3) pivots back to the home position after having been pulled from the soil.

2. The soil working device of claim 1, **characterized in that** the torsion element is formed by at least one elastomeric element or an elastomer/metal composite element (1a, 1b), whose one axial end is connected with the guide element (4) in a torque-proof manner, and whose other axial end is connected with the tool holder (2) in a torque-proof manner.

3. The soil working device of claim 1, **characterized in that** the torsion element is a coil-shaped or helical metal torsion spring (1c).

4. The soil working device of claim 1, **characterized in that** the torsion element is a helical or coil-shaped metal torsion spring surrounded by elastomer.

5. The soil working device of one of claims 1 to 4, **characterized in that** the guide element (4) is guided along a guide (11) fastened to the machine frame (23).

6. The soil working device of claim 5, **characterized in that** the angle of the guide (11) is adjustable in a vertical plane extending in the travelling direction in order to set a penetration angle of the penetration tools (3).

7. The soil working device of claim 6, **characterized in that** the angle of the linear guide (11) is centrally adjustable with respect to the machine frame (23) in order to set a penetration angle.

8. The soil working device of one of the preceding claims, **characterized in that** at least two rows (18, 19) of penetration tools or sets of penetration tools are arranged one behind the other in the travelling direction.

9. The soil working device of one of claims 1 to 4, **characterized in that** the guide element (4) is a support arm pivotally fastened in a second pivot bearing (22) at the machine frame (23).

10. The soil working device of one of the preceding claims, **characterized in that** a plurality of penetration tools (3) or a plurality of sets of penetration tools (3) are arranged side by side.

11. The soil working machine of claim 10, **characterized in that** the penetration tools (3) or sets of penetration tools (3) arranged side by side may be driven in a phase-shifted manner.

12. The soil working device of one of the preceding claims, **characterized in that** a central adjustment means for the penetration angle of the penetration tools (3) is provided, comprising at least one centrally adjustable stop (24), said at least one stop (24) being mounted to the machine frame (23) and limiting the movement of the penetration tools (3) back to the home position, caused by the restoring moment.

13. The soil working device of claim 12, **characterized in that** at least one link arm (25) is pivotally supported at the tool holder (2), which is in direct contact with the stop (24) prior to penetration of the soil, and whose end remote from the tool holder (2) is pivotally supported at an intermediate element (26) which in turn is pivotally supported at the machine frame (23).

14. The soil working device of one of claims 1 to 13, **characterized in that** the height of the stroke performed by the guide element (4) is adjustable.

15. The soil working device of one of claims 1-12, **characterized in that** the guide element (4', 4") is of bipartite structure, the upper guide element (4') being coupled to the drive (17) and the lower guide element (4") supporting the tool holder (2), wherein at least one compression spring (21) is arranged between the upper and the lower guide element (4', 4"), which allows the at least one penetration tool (3) to penetrate into the soil, given a normal soil resistance, and allows the penetration tool (3) to deflect, when the soil resistance is substantially higher than a normal soil resistance.

16. The soil working device of one of the preceding claims, **characterized in that** the pushrod (5', 5") is compressible against a spring force, it being possible for the at least one penetration tool (3) to penetrate into the soil, given a normal soil resistance, and for the penetration tool (3) to deflect, when the soil resistance is substantially higher than a normal soil resistance.

17. The soil working device of claim 16, **characterized in that** a spring element (50) generates the spring force, the spring element (50) being formed by a helical or coil-shaped compression or tension spring or by an elastomer/metal composite or elastomere.

18. The soil working device of one of claims 1-17, **characterized in that** the torsion element comprises at least two magnetic elements (60, 65), the at least two magnetic elements (60, 65) being oriented such relative to each other that they allow the tool holder (2) to pivot about the first pivot axis (40) and that they exert a magnetic restoring moment on the tool holder when the engagement with the soil has ended, so that the penetration tool (3) pivots back to the home position after having been pulled from the soil.

19. The soil working device of claim 18, **characterized in that** the magnetic elements are permanent magnets or solenoids.

## Revendications

1. Dispositif de traitement de sol mobile, avec
- un châssis de machine (23),
- un entraînement pour au moins un outil de pénétration (3) déplaçable vers le haut et vers le bas, l'outil de pénétration (3) pouvant être enfoncé dans le sol et en être retiré,
- un élément de guidage (4) guidé de façon mobile sur le châssis de machine (23) pour au moins un outil de pénétration (3),
- un porte-outil (2) pour l'outil de pénétration (3), qui est monté autour d'un premier axe de pivotement (40) dans l'élément de guidage (4) déplaçable vers le haut et vers le bas par l'entraînement pour permettre, pendant l'intervention sur le sol, un pivotement de l'outil de pénétration (3) à l'encontre d'une force de ressort,
**caractérisé en ce que**,
de façon coaxiale au premier axe de pivotement (40), il est disposé, entre le porte-outil (2) et l'élément de guidage (4), un élément de torsion (1a, 1b, 1c) lequel, sous l'application d'une force sur le au moins un outil de pénétration (3), permet un pivotement du porte-outil (2) par rapport à l'élément de guidage (4) et,en cas de suppression de l'application de la force, exerce un moment de rappel sur le porte-outil (2) de telle sorte que l'outil de pénétration (3) pivote en retour vers la position initiale après le retrait du sol.

2. Dispositif de traitement de sol selon la revendication 1, **caractérisé en ce que** l'élément de torsion se compose d'au moins un élément élastomère ou d'un élément composite élastomère-métal (1a, 1b) lequel est raccordé solidaire en rotation à l'une de ses extrémités axiales à l'élément de guidage (4) et, à l'autre extrémité axiale au porte-outil (2).

3. Dispositif de traitement de sol selon la revendication 1, **caractérisé en ce que** l'élément de torsion est un ressort de torsion métallique (1c) de forme hélicoïdale ou spirale.

4. Dispositif de traitement de sol selon la revendication 1, **caractérisé en ce que** l'élément de torsion est un ressort de torsion métallique de forme hélicoïdale ou spirale, revêtu d'élastomère.

5. Dispositif de traitement de sol selon une des revendications 1 à 4, **caractérisé en ce que** l'élément de guidage (4) est guidé le long d'un guidage (11) fixé sur le châssis de machine (23).

6. Dispositif de traitement de sol selon la revendication 5, **caractérisé en ce que** l'angle du guidage (11) est réglable dans un plan vertical orienté dans le sens de la marche en vue du réglage d'un angle de pénétration pour les outils de pénétration (3).

7. Dispositif de traitement de sol selon la revendication 6, **caractérisé en ce que** l'angle du guidage (11) linéaire par rapport au châssis de machine (23) peut être réglé de façon centrale en vue du réglage d'un angle de pénétration.

8. Dispositif de traitement de sol selon une des revendications précédentes, **caractérisé en ce qu'**au moins deux rangées (18, 19) d'outils de pénétration ou de groupes d'outils de pénétration sont disposés l'un(e) derrière l'autre dans le sens de la marche.

9. Dispositif de traitement de sol selon les revendications 1 à 4, **caractérisé en ce que** l'élément de guidage (4) est un bras de support qui est fixé de façon pivotante dans un deuxième palier pivotant (22) sur le châssis de machine (23).

10. Dispositif de traitement de sol selon une des revendications précédentes, **caractérisé en ce que** plusieurs outils de pénétration (3) ou plusieurs groupes d'outils de pénétration (3) sont disposés côte à côte.

11. Dispositif de traitement de sol selon la revendication 10, **caractérisé en ce que** les outils de pénétration (3) ou groupes d'outils de pénétration (3) disposés côte à côte peuvent être entraînés de façon déphasée les uns par rapport aux autres.

12. Dispositif de traitement de sol selon une des revendications précédentes, **caractérisé en ce qu'**il est prévu un dispositif de réglage central pour l'angle de pénétration de l'outil de pénétration (3) avec au moins une butée (24) réglable de façon centrale, la au moins une butée (24) étant fixée sur le châssis de machine (23) et limitant le mouvement de retour des outils de pénétration (3) vers la position initiale du fait du moment de rappel.

13. Dispositif de traitement de sol selon la revendication 12, **caractérisé en ce qu'**au moins un bras d'accouplement (25) est monté de façon pivotante sur le porte-outil (2), lequel est en contact direct avec la butée (24) avant la pénétration dans le sol et est monté de façon pivotante, à l'extrémité éloignée du porte-outil (2), sur un élément intermédiaire (26) qui, de son côté, est supporté de façon pivotante sur le châssis de machine (23).

14. Dispositif de traitement de sol selon une des revendications 1 à 13, **caractérisé en ce que** la hauteur de la course effectuée par l'élément de guidage (4) est réglable.

15. Dispositif de traitement de sol selon une des revendications 1 à 12, **caractérisé en ce que** l'élément de guidage (4', 4") est formé de deux pièces, l'élément de guidage supérieur (4') étant couplé à l'entraînement (17), et l'élément de guidage inférieur (4'') portant le porte-outil (2), au moins un ressort de pression (21) étant disposé entre les éléments de guidage supérieur et inférieur (4', 4"), lequel permet une pénétration par le au moins un outil de pénétration (3) en cas d'une résistance du sol normale et un enfoncement de l'outil de pénétration (3) lorsque la résistance du sol est considérablement supérieur à une résistance du sol normale.

16. Dispositif de traitement de sol selon une des revendications précédentes, **caractérisé en ce que** la barre de poussée (5', 5") est constituée de façon comprimable à l'encontre d'une force de ressort, une pénétration par le au moins unoutil de pénétration (3) étant possible en cas d'une résistance du sol normale, et un enfoncement de l'outil de pénétration (3) étant possible lorsque la résistance du sol est considérablement supérieur à une résistance du sol normale.

17. Dispositif de traitement de sol selon la revendication 16, **caractérisé en ce qu'**un élément de ressort (50) produit la force de ressort, l'élément de ressort (50) étant composé d'un ressort de pression ou de traction de forme hélicoïdale ou spiralée ou d'un composite élastomère-métal ou d'un élastomère.

18. Dispositif de traitement de sol selon une des revendications 1 à 17, **caractérisé en ce que** l'élément de torsion présente au moins deux éléments (60, 65) magnétiques, les au moins deux éléments (60, 65) magnétiques étant orientés l'un par rapport à l'autre de telle sorte qu'ils permettent un pivotement du porte-outil (2) autour du premier axe de pivotement (40) et, en cas de suppression de l'intervention sur le sol, exercent un moment de rappel magnétique sur le porte-outil (2) de telle sorte que l'outil de pénétration (3) pivote en retour vers la position initiale après le retrait du sol.

19. Dispositif de traitement de sol selon la revendication 18, **caractérisé en ce que** les éléments magnétiques sont composés d'aimants permanents ou d'électro-aimants.
